# EUROPEAN PATENT APPLICATION

(11) **EP 3 293 624 A1**
(43) Date of publication of application: **14.03.2018**
(21) Application number: 17190087.1
(22) Date of filing: 08.09.2017
(51) Int. Cl.: G06F 3/0489, G06F 3/023, G06F 21/32, G06F 3/01, G06F 3/0488, G06F 3/02

(54) **INPUT DEVICE AND METHOD**

(30) Priority: 08.09.2016 GB 201615263
(71) Applicant: Sony Interactive Entertainment Inc., Tokyo 108-0075 (JP)
(72) Inventor: STEMPLE, Lloyd, London, W1F 7LP (GB)
(74) Representative: D Young & Co LLP

(57) **Abstract**

An input device for use in a processing system, the device comprising one or more input keys operable to sense a user's fingers touching one or more of the input keys without using the input keys to provide a keystroke input to control a processing device associated with the processing system and a communication unit operable to transmit information identifying the input keys that the user is touching to the processing device, wherein the processing device is operable to generate information to indicate to the user which input keys are being touched.

## Description

The present disclosure relates to an input device and method.

The use of head-mountable display devices (HMDs) as displays for both entertainment and professional purposes has increased in recent years. Such devices seek to provide an immersive virtual reality (VR) experience to a user by providing a view of a virtual environment to replace a user's view of the outside world. For example, a user may be provided with a view of a game that they are playing that causes them to believe they are present in the game environment, or a user designing virtual objects may be able to access alternative views of the objects in VR more intuitively than when traditional displays and inputs are used.

While a number of systems such as this may rely on gesture-based inputs, in many applications it is advantageous for a user to be provided with traditional input devices such as a mouse and keyboard. Traditional input devices may feel more comfortable to a user initially, due to their familiarity, and may also provide a greater possible range of inputs than gesture-based inputs or a number of common peripherals associated with VR arrangements. Furthermore, the HMD arrangement obscures the user's field of view so that the user is not able to see the input devices that they are provided with; consequently using a familiar device may be particularly advantageous as a result.

While many users are sufficiently acquainted with these traditional inputs so as to be able to use them without being able to see them, for example keyboard users who can 'touch-type', a large number of users may not be able to do so effectively. If a user is unable to provide inputs accurately, then gameplay or the like may be particularly frustrating as the user is not able to perform their desired actions. The arrangement described by the present disclosure seeks to mitigate this problem by providing a reliable input device and method to a user.

This disclosure is defined by claims 1 and 10, with further respective aspects and features of the disclosure defined in the appended claims.

Embodiments of the disclosure will now be described with reference to the accompanying drawings, in which:
Figure 1 schematically illustrates an HMD worn by a user;
Figure 2 schematically illustrates a key arrangement on a standard keyboard;
Figure 3 schematically illustrates a modified keyboard;
Figure 4a schematically illustrates a keyboard in use;
Figures 4b and 4c schematically illustrate the display of information about user's finger positioning;
Figure 5 schematically illustrates a processing system;
Figure 6 schematically illustrates a finger position identifying method.

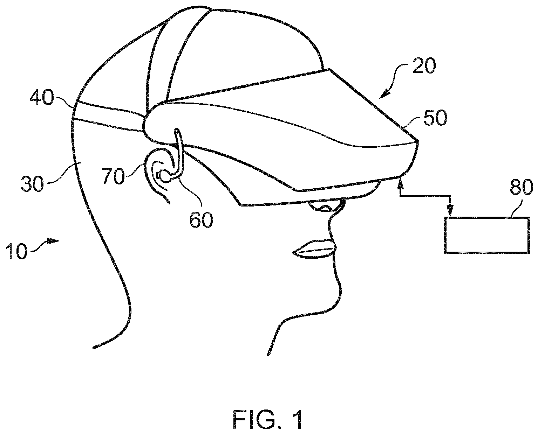

In Figure 1, a user 10 is wearing an HMD 20 on the user's head 30. The HMD comprises a frame 40, in this example formed of a rear strap and a top strap, and a display portion 50.

The HMD of Figure 1 completely obscures the user's view of the surrounding environment. All that the user can see is the pair of images displayed within the HMD.

The HMD has associated headphone earpieces 60 which fit into the user's left and right ears 70. The earpieces 60 replay an audio signal provided from an external source, which may be the same as the video signal source which provides the video signal for display to the user's eyes.

In operation, a video signal is provided for display by the HMD. This could be provided by an external video signal source 80 such as a video games machine or data processing apparatus (such as a personal computer), in which case the signals could be transmitted to the HMD by a wired or a wireless connection. Examples of suitable wireless connections include Bluetooth® connections. Audio signals for the earpieces 60 can be carried by the same connection. Similarly, any control signals passed from the HMD to the video (audio) signal source may be carried by the same connection.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other examples, the user's view of the external environment may not in fact be entirely obscured by the HMD; the displayed images could be arranged so as to be superposed (from the user's point of view) over the external environment - although it should be appreciated that the user's field of view may be obscured in other ways, such as when using the HMD in the dark.

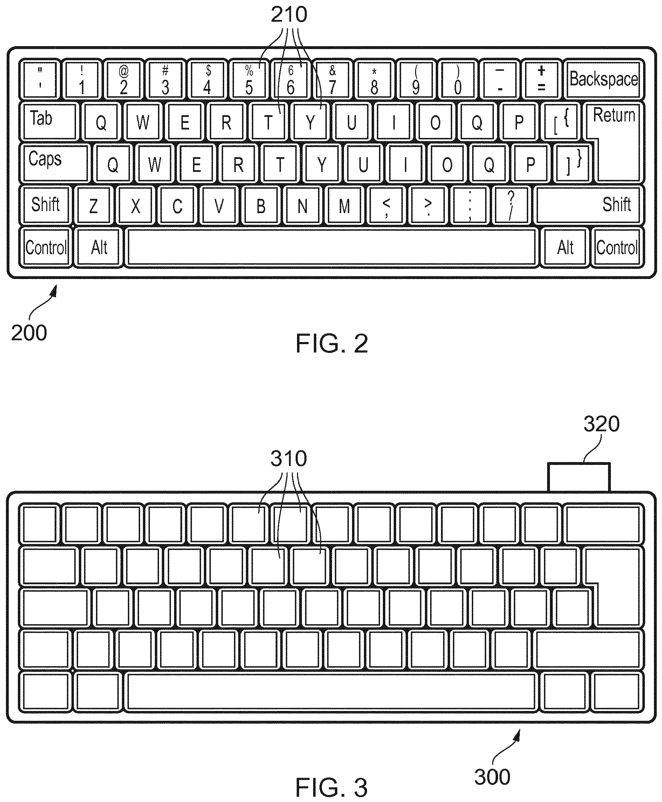

As noted above, the user may be provided with an input device in order to facilitate interaction with an application that is being executed to generate display images for display by the HMD. Figure 2 schematically illustrates a keyboard 200, which is an example of a traditional input device that may be provided for the user to input commands to control processing by the processing device. The keyboard 200 may be connected to an associated processing device via any suitable wired or wireless connection means in order to provide inputs to control processing.

Keyboards, such as the keyboard 200 of Figure 2, comprise a plurality of keys 210 that each correspond to one or more functions or inputs. Each of these keys 210 is associated with a switch that provides an electrical signal when the key is depressed by the user, the electrical signal being interpreted as a key press by a processing element associated with the keyboard 200 and information about the key press is provided to a processor at a processing device in order to control an application or the like that is being executed by the processing device.

In order to mitigate the problems identified above, a modified keyboard according to the present disclosure is provided. This modified keyboard is operable to detect the presence of a user's fingers on one or more of the keys, without the user having to depress the keys and therefore provide an input to the associated processing device.

Figure 3 schematically illustrates a modified keyboard 300, which comprises a plurality of input keys 310 that are operated in the same manner as those described with reference to the keyboard 200 of Figure 2. Information about a user's interaction with the keyboard 300 is provided to the associated processing device via a communication unit 320. Whilst shown extending from the top of the keyboard 300, this is simply for clarity and the communication unit 320 may be located anywhere in the keyboard 300. The communication unit operable to transmit information identifying the input keys that the user is touching to the processing device. From information about which keys are touched it may also be possible to deduce the position of the user's fingers, as will be discussed below.

In Figure 3 the input keys 310 are shown without markings to designate their functions. This would not generally impair the user's ability to interact with the keyboard 300 as the keys 310 would not be expected to be visible to the user during use in a VR application; however in some embodiments markings may be provided to denote the input associated with each key 310.

As noted above, each of the keys 310 may be operated in the same manner as described above with reference to Figure 2 with respect to providing inputs to control processing. However, the keys 310 are also provided with a capacitive sensor operable to be able to detect when a user rests their fingers on one or more of the keys 310. For example, this could be a touch-sensitive region on the upper surface of the key (i.e. the portion of the key that the user touches when pressing the key); therefore in some embodiments the capacitive element is not associated with a switch corresponding to an input key.

The keys 310 are therefore one or more input keys operable to sense a user's fingers touching one or more of the input keys, the sensing able to be performed without using the input keys to provide a keystroke input to control a processing device associated with the processing system. This is achieved by the position of the user's fingers being detected using the capacitive elements on the one or more input keys, rather than the switches corresponding to the input keys.

Any suitable alternatives to the capacitive input may be used instead, for example a resistive touchscreen type arrangement may be suitable for detecting the presence of a user's fingers without the user pressing any of the keys 310. Likewise, the touching of a key may ground a circuit for that key to earth, and be similarly detected. Alternatively, or in addition, a user may be provided with gloves that are able to interact with the keys 310 in order to provide information about the location of the user's fingers.

An example of this is a pair of gloves with magnets near the tips of the user's fingers when in use, the position of which could be determined using a suitable sensor (such as a detector for detection of the Hall Effect). The latter of these exemplary detection methods may be advantageous in that a detection may be made without physical contact, and thus the possibility of accidental key presses is reduced. In addition, the lack of contact means that a sensor could be present below the keys and as such a single sensor may be made large enough to correspond to several of the keys 310, therefore reducing the number of components in the keyboard 300. In some embodiments, a single capacitive layer may be provided to cover the upper surface of a plurality of keys 310; for example, a deformable sheet of a capacitive material may be provided that is capable of remaining intact even when the keys 310 are depressed.

In some embodiments it may be possible to predict or identify which finger is in contact with each of the keys 310, for example by contact area size and/or by considering that a user's fingers on the keyboard will generally be aligned in a consistent order (that is to say that users are unlikely to cross their fingers or the like when typing). This information could be combined with the user's typing history to predict which finger is most likely to be present on a particular key.

Alternatively, or in addition, fingerprint recognition may be used to identify a user (or each of the user's fingers) in order to provide more accurate information; this may be particularly advantageous when multiple users are present and interacting with the same input device. As a further alternative or additional feature, it may be possible to distinguish between a plurality of users based upon features such as contact area with the finger; for example, if a child and an adult are using the same keyboard to play a multiplayer game it would be apparent that the smaller finger contact area would correspond to the child's fingers.

By utilising one or more of the above features, optionally the input device is operable to predict or identify which of the user's fingers correspond to one or more of the touched input keys. Alternatively, or in addition, the input device is optionally operable to obtain information to identify a user or users from the fingers that are touching input keys.

It should be noted that generally the detection of the location of the user's finger position on the keyboard would be performed independently of the switches that are present in the keyboard 200 of Figure 2. This feature allows the user's finger positions to be detected without requiring inputs via key presses or causing the chances of an accidental key press being registered to be increased.

The associated processing device is operable to identify which of the keys 310 are being touched by a user using the information received from the keyboard 300; the processing device is therefore operable to generate information to indicate to the user which input keys are being touched. The generated information is presented to a user via either a conventional display device (such as a television or computer monitor) or via a head-mountable display device. This information may be presented to the user in a number of different ways, for example visually or aurally (or a combination), and allows the user to establish where their hands are relative to the keys 310.

This information may be useful to the user either to help them orientate themselves to begin touch-typing, or to allow a user to 'test' a key before pressing it by resting a finger on a key and identifying if it is the desired key from the information presented. If the desired key is the one indicated by the information, then the user is able to press the key to achieve the desired input; if it is not, the user may simply move their fingers to locate the desired key (which may be found more easily having received information about the location of a particular key or keys.

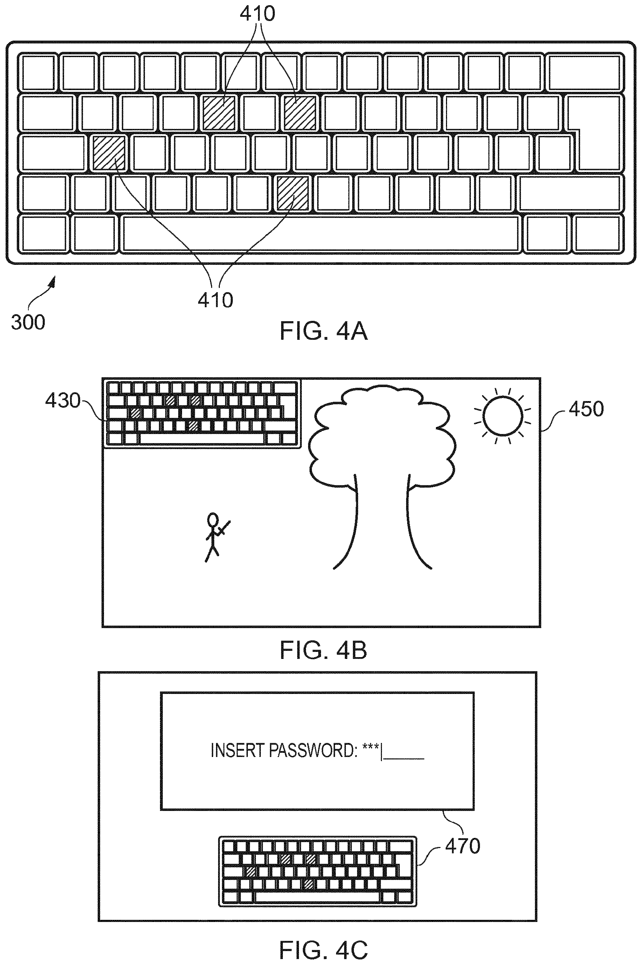

Figure 4a schematically illustrates the keyboard 300 with a selection of keys 410 being highlighted to indicate those that the user is currently in contact with. The keyboard 300 may be used detect the location of the fingers and communicate information about the position of the fingers to the user, for example in one of the ways described below.

Figures 4b and 4c schematically illustrate methods of indicating information about which keys their fingers are in contact with to a user. Such information may be provided by default for a particular application and/or user, or may be toggle-able in the settings by a user. For example, an initial detection of a touch by any key on the keyboard may cause the information to be provided. Alternatively, or in addition, the user may be able to request that the information is displayed using a predetermined gesture or spoken command. In response to this, the information may be displayed temporarily (for the next 5 seconds, for example), until an input is detected (i.e. the user begins typing once they have orientated themselves on the keyboard) or until otherwise instructed.

Figure 4b is an example in which a user is playing a game in which the display of the keyboard is not integrated with the virtual environment; an image 430 of the keyboard 300 is displayed at an appropriate position on the screen 450 (for example, away from any features identified as being important in the displayed image) and the selection of keys 410 currently being touched by the user are displayed differently to the rest of the keys. Typically, but optionally, the keys displayed in this manner are labelled to identify them, thereby effectively providing a full or partial keyboard map with 'you are here' markings for the currently touched keys. This is an example of an arrangement in which a visual representation of at least a portion of the input device is presented on the display.

The virtual keyboard may have an appearance that is dependent upon the application generating the images for display or the type of virtual environment being displayed to the user, for example with varying levels of opacity or different colours and themes. For example, in a scifi game the keyboard image 430 may have a more futuristic appearance. The selection of keys 410 are displayed with a hatched appearance, but of course any manner of distinguishing between the selection of keys 410 and the rest of the keys in the image 430 may be suitable - for example, a different colour or an image of a fingerprint or the like being provided on the key.

Alternatively, only the selection of keys 410 that are being rested upon by the user's fingers may be shown. An example of this is showing a set of keys on the screen, either organised in the same relative positions as they appear on the physical keyboard or as a simple list from which the user can identify which finger is on which button. As another alternative, a reduced-size area of the keyboard is shown so as to indicate all of the keys 410 that are being interacted with whilst not displaying areas of the keyboard which are not being interacted with, so as to reduce the screen real estate requirements. For example, if the user were playing a first-person shooter game their hands would only be on the left hand side of the keyboard (centred about the W, A, S and D keys using a common set of controls); therefore displaying the right hand side of the keyboard would generally be unnecessary in providing information to the user about the location of their fingers. Likewise, as another alternative, a reduced-size area of the keyboard is shown so as to indicate all of the keys 410 that are being interacted with whilst also showing immediately adjacent keys, for example with greater transparency, so as to provide guidance to the user if they wish to correct their finger position. For example, a user may intend to place their fingers on the W, A, S, and D keys, but accidentally place them on E, S, D and F. In this case, the display of the neighbouring keys provides a clear indication of how to correct their finger positioning.

Figure 4c instead shows a virtual environment in which a keyboard is integrated into the environment; in this example the user is at a virtual computer terminal 470, but the keyboard may be integrated into the virtual environment in other ways, such as the user's avatar carrying a keyboard or being able to conjure a virtual keyboard when a text input is required. In this embodiment, the selection of keys 410 may be displayed differently (as is schematically illustrated) to the other keys. Alternatively, or in addition, the information may be used to display virtual hands that are resting on the keyboard in a similar manner to the user's hands are resting on the physical keyboard 300; in some embodiments, the displayed hands may also be transparent so as to allow the user to view the selection of keys 410 that the virtual hands are interacting with.

In an embodiment in which virtual hands are displayed, a model may be used to determine where the hands (and associated fingers) should be positioned. This model uses the information about which keys are being touched by the user as an input, and other factors may be considered such as an identification of which keys are being touched by which fingers (if it is possible to detect, otherwise the model may be able to predict this as described above). Alternatively, or in addition, the model may use images of the user's hands (for example, from a camera associated with the HMD) to identify a hand position, or peripherals that are operable to detect a position may be worn on the user's wrists to provide location data.

Optionally, in any of the above examples, the display behaviours may vary with use. For example, when the user is asked to or has the option of typing free text, then the whole keyboard may be displayed. However, during conventional gameplay for example, the keyboard may not be displayed if the user is touching keys pre-associated with common actions (a so-called key binding), such as movement, firing and interaction. In this case, all or part of the keyboard (as described above) may only be shown if the user touches a key that does not have a key binding, or if the key belongs to a set of less frequently used key bindings that the user may be less habituated to (for example, where 'M' corresponds to displaying a map, whilst 'N' corresponds to consuming a potion - pressing the wrong one may break the flow of the game, or unnecessarily consume a valuable in-game resource).

Hence more generally, the information may be selectively presented when the user is touching unbound keys or optionally keys in a second tier of bound keys different to a first tier of bound keys.

Alternatively, or in addition, information about the location of the user's fingers may be provided to the user aurally. For example, a particular gesture or spoken command could cause the information to be read to the user. This may either be as a simple list of keys that are being interacted with, or it may be possible to distinguish between a user's fingers or at least which hand to which the fingers belong to, and more detailed information may be provided to the user. This may be particularly advantageous when the display of a keyboard is inappropriate (as it would impair the user's sense of immersion) or impractical (for example, due to there not being a suitable area of the screen available).

Providing the information aurally may also be useful for a user with impaired vision, as the user may not be able to easily identify the keys from looking at the keyboard; in this case, displaying the information on the screen may not be any more suitable. Such a feature would provide the user with an alternative to spoken inputs (which may be disruptive in public places), even if they were not able to touch-type accurately without cues, by enabling a user to identify keys on the keyboard without relying on eyesight.

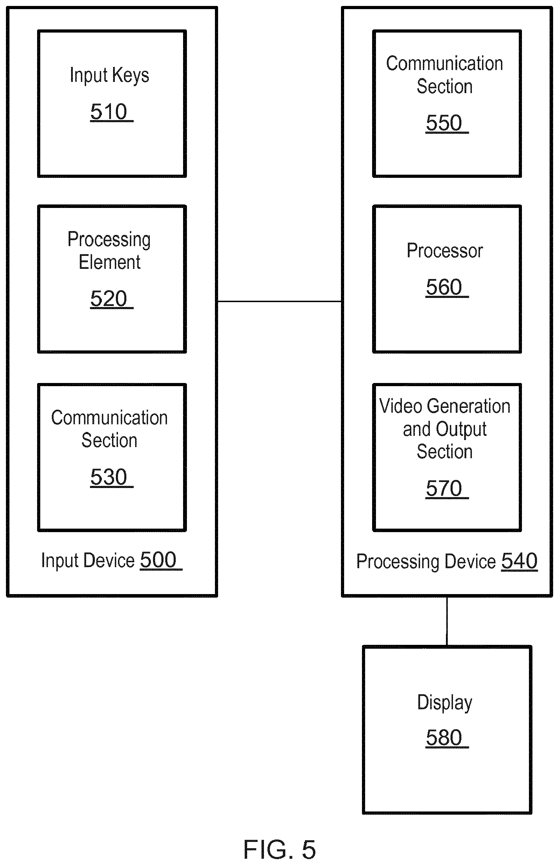

Figure 5 schematically illustrates a processing system comprising an input device 500, a processing device 540 and a display 580.

The input device 500 comprises one or more input keys 510, such as the keys corresponding to different letters on a keyboard. The input device 500 also comprises a processing element 520, which may be used to identify inputs from the user; for example, converting information from sensors into information about which keys were pressed by a user. The input device further comprises a communication section 530 which is used to transmit information to the processing device 540, the information relating to at least either presses or touches of the input keys 510.

The processing device 540 comprises a communication section 550 that receives inputs from the input device 500 in addition to any information from other peripherals, such as microphones or tracking devices, associated with the user. The processing device 540 further comprises a processor 560 that is operable to process the inputs received via the communication section 550. In some embodiments it is the processor 560 that identifies the keys that the user is touching, but this step may be performed by the input device 500 before transmitting information to the processing device 540.

The video generation and output section 570 is operable to generate video and output it to the display 580. The video may be generated in dependence upon the processing performed by the processor 560 such that it may provide information about touched input keys to the user. As described above, this may be using either visual or aural methods; the images generated may comprise the information, or an appropriate voice-over or the like may be provided with the video content.

The display 580 is operable to present the content provided by the processing device 540 to the user. The display 580 may be a television or monitor as in a normal processing system arrangement, or it may be an HMD as described above. The display 580 should be operable to provide at least one of audio and video content to a user.

An arrangement such as that described above need not be used in conjunction with an HMD system, as advantages may be derived even when the user's view of the physical keyboard 300 is not impaired. For example, when using a keyboard 300 with blank keys a new user may not be fully comfortable with the key layout and therefore need help in locating the desired keys. Alternatively, a user (or a plurality of users using the same keyboard 300) may be wishing to switch between different key layouts (such as QWERTY and Dvorak) and as such an unmarked keyboard may be advantageous as labelling that does not correspond to the selected key layout may be confusing to a user. Similarly, a user may elect to play in the dark and hence whilst they could view the keyboard upon close inspection, this would break their engagement with the displayed game.

Such an arrangement may also be advantageous when applied to other physical input devices. One example of this is a piano-style keyboard in an arrangement where the user is provided with sheet music in a virtual environment.

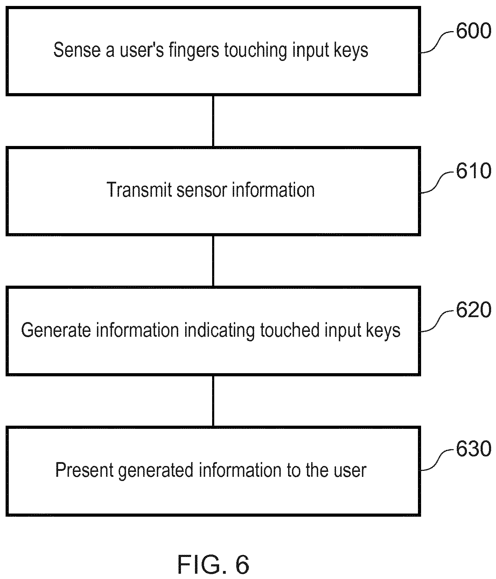

Figure 6 schematically illustrates a method for indicating the position of a user's fingers on an input device 500 using a system that also comprises a processing device 540.

A step 600 comprises sensing a user's fingers touching one or more input keys 510 associated with the input device 500, wherein the touch does not cause the input keys 510 to provide a keystroke input to control a processing device 540 associated with the processing system. As described above, the sensing is performed using the capacitive sensor (or an equivalent) that is provided to detect touches of the input keys 510 by the user.

A step 610 comprises transmitting information about the input keys 510 that the user is touching to the processing device 540. The information is transmitted via any wired or wireless connection that is present between the input device 500 and the processing device 540.

A step 620 comprises generating information to indicate to the user which input keys 510 are being touched. This is performed by the processing device 540, and the generated information may be in any of a number of formats; for example, a list of touched keys or audio/visual representations of the information.

A step 630 comprises presenting the generated information to the user in any of the ways discussed above, for example those described with reference Figures 4B and 4C. This presentation of information may be visual, aural or any combination.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. An input device for use in a processing system, the device comprising:
one or more input keys operable to sense a user's fingers touching one or more of the input keys without using the input keys to provide a keystroke input to control a processing device associated with the processing system; and
a communication unit operable to transmit information identifying the input keys that the user is touching to the processing device,
wherein the processing device is operable to generate information to indicate to the user which input keys are being touched, and
wherein the visual representation of at least a portion of the input device is only presented on the display if a key not belonging to a predetermined set of keys is touched.

2. An input device according to claim 1, wherein the generated information is presented to the user via one selected from the list consisting of:
i. a display device; and
ii. a head-mountable display device.

3. An input device according to claim 1, wherein the presented portion of the input device comprises only the touched keys and neighbouring keys.

4. An input device according to claim 1, wherein a position of the user's fingers is detected using capacitive elements on the one or more input keys.

5. An input device according to claim 4, wherein the capacitive element is not associated with a switch corresponding to an input key.

6. An input device according to claim 1, wherein the input device is operable to identify which of the user's fingers correspond to one or more of the touched input keys.

7. An input device according to claim 1, wherein the input device is operable to obtain information to identify a user or users from the fingers that are touching input keys.

8. An input device according to claim 1, wherein the generated information is provided to the user in response to a predetermined gesture or spoken command.

9. An input device according to claim 1, wherein the input device is a keyboard.

10. An input method for use with a processing system comprising an input device, the method comprising:
sensing a user's fingers touching one or more input keys associated with the input device, wherein the touch does not cause the input keys to provide an input to control a processing device associated with the processing system;
transmitting information about the input keys that the user is touching to the processing device; and
generating information to indicate to the user which input keys are being touched,
wherein the visual representation of at least a portion of the input device is only presented on the display if a key not belonging to a predetermined set of keys is touched.

11. Computer software which, when executed by a computer, causes the computer to carry out the method of claim 10.

12. A machine-readable non-transitory storage medium which stores computer software according to claim 11.
